# EUROPÄISCHE PATENTSCHRIFT

(11) **EP 4 042 853 B1**
(45) Veröffentlichungstag und Bekanntmachung des Hinweises auf die Patenterteilung: **13.11.2024**
(21) Anmeldenummer: 22401001.7
(22) Anmeldetag: 07.02.2022
(51) Int. Cl.: A01C 7/12

(54) **DOSIERVORRICHTUNG EINER LANDWIRTSCHAFTLICHEN VERTEILMASCHINE**
DOSING DEVICE OF AN AGRICULTURAL DISTRIBUTION MACHINE
DISPOSITIF DE DOSAGE D'UNE TRIEUSE AGRICOLE

(30) Priorität: 15.02.2021 DE 102021103452
(43) Veröffentlichungstag der Anmeldung: 17.08.2022
(73) Patentinhaber: Amazonen-Werke H. Dreyer SE & Co. KG, 49205 Hasbergen (DE)
(72) Erfinder: Wien, Thomas, 28816 Stuhr (DE); Radeke, Jan Philipp, 27211 Bassum (DE); Lübben, Jan-Eike, 26188 Edewecht (DE)

(56) Entgegenhaltungen:
- EP-A1- 3 238 518
- EP-A2- 2 786 649
- JP-B2- 5 237 855

## Beschreibung

Die Erfindung betrifft eine Dosiervorrichtung einer landwirtschaftlichen Verteilmaschine gemäß dem Oberbegriff des Patentanspruches 1 und eine landwirtschaftliche Verteilmaschine gemäß dem Oberbegriff des Patentanspruches 7.

Auf dem Gebiet der Landwirtschaft sind eine Vielzahl unterschiedlicher Varianten von Verteilmaschinen zum Ausbringen von granularem Material, insbesondere Saatgut und/oder Dünger, bekannt. Hierzu zählen neben pneumatischen und/oder mechanischen Sämaschinen auch Einzelkornsämaschinen, die dazu geeignet sind das granulare Material auf einer landwirtschaftlichen Nutzfläche abzulegen. Gattungsgemäße Verteilmaschinen weisen darüber hinaus zumindest eine Dosiervorrichtung auf, die dazu eingerichtet ist, von wenigstens einem Vorratsbehälter zubringbares granulares Material bedarfsgerecht und/oder in einstellbaren Mengen zu dosieren und an nachgeordnete Ausbringorgane auszugeben.

Aufgrund der schwierigen Betriebsbedingungen während der Ausbringung, können sich mit zunehmender Betriebsdauer anhaftende Verschmutzungen und/oder Agglomerationen von granularem Material innerhalb derartiger Dosiervorrichtungen ansammeln. Um dennoch eine ausreichend präzise und/oder betriebssichere Dosierung des granularen Materials sicherzustellen, ist es erforderlich, die Dosiervorrichtung in regelmäßigen Zeitabständen und/oder fortlaufend während des Ausbringvorgangs zu Reinigen und so zumindest teilweise vor anhaftenden Verschmutzungen und/oder anhaftendem granularen Material zu befreien. Bei modernen Verteilmaschine, insbesondere Sämaschinen, hat sich aus diesem Grund der Einsatz von innerhalb der Dosiervorrichtungen angeordneter Reinigungseinrichtungen durchgesetzt.

Eine derartige Dosiervorrichtung mit einer Reinigungseinrichtung ist beispielsweise in den Druckschriften DE 31 29 235 A1 und/oder EP 2 786 649 A2 beschrieben. Die Dosiervorrichtung umfasst dabei ein um eine Drehachse rotatorisch antreibbares, insbesondere nach Art einer Dosierwalze und/oder eines Dosierrads ausgebildetes, Dosierelement, welches eine oder mehrere, insbesondere alternierend und/oder nebeneinander angeordnete, Nockenreihen aufweist. Das Dosierelement ist insbesondere dazu eingerichtet, das zubringbare granulare Material mittels einer Mehrzahl von Nockenvorsprüngen, die an der wenigstens einen Nockenreihe ausgebildet sind, aufzunehmen und/oder zumindest teilweise in einer Drehrichtung des Dosierelements zu fördern. Darüber hinaus umfasst die Dosiervorrichtung zumindest eine dem Dosierelement zugeordnete Reinigungseinrichtung. Die Reinigungseinrichtung weist dabei wenigstens ein, insbesondere elastisches und/oder stiftartiges, Reinigungselement und wenigstens ein Halteelement auf. Das Reinigungselement ist dabei am Halteelement und in die wenigstens eine Nockenreihe eingreifend angeordnet und dazu eingerichtet, die wenigstens eine Nockenreihe, insbesondere mit den jeweiligen Nockenvorsprüngen, zumindest teilweise abzustreifen und/oder zu reinigen.

Aufgrund der stetig ansteigenden Komplexität moderner Verteilmaschinen, werden frei verfügbare Bauräume immer kleiner. Problematisch dabei ist unter anderem der verhältnismäßig hohe Platzbedarf bisheriger Reinigungseinrichtungen. Um eine ausreichende elastizität bzw. flexibilität der Reinigungselemente zu erreichen, sind diese bisher besonders lang ausgebildet. Zusätzlich erfordern bisherige Reinigungseinrichtung verhältnismäßig große bzw. lange Halteelemente, um die entsprechenden Reinigungselemente daran anzuordnen, insbesondere mittels Befestigungsmitteln daran zu befestigen. Neben dem hohen Platzbedarf geht damit auch eine große Ablagerungsfläche für Verschmutzungen und/oder anhaftendes Material einher. Diese können sich so während des Betriebs besonders gut an derartigen Reinigungseinrichtungen anhaften und/oder verklemmen und so den ordnungsgemäßen Betrieb der Reinigungseinrichtung und/oder der Dosiervorrichtung einschränken. Aufgrund der geringen Bauräume und einer nicht optimalen Positionierung der Reinigungseinrichtungen ist insbesondere auch die Zugänglichkeit zu Reinigungs- und/oder Wartungszwecken besonders schwierig und zeitaufwändig.

Darüber hinaus verursachen bisherige Reinigungseinrichtungen, die insbesondere zumindest teilweise nach Art von Reinigungsbürsten und/oder metallischen Reinigungsfingern ausgebildet sind, einen besonders hohen Verschleiß und/oder hohe Drehmomente an den zugeordneten Dosierelementen, insbesondere Dosierrädern und/oder Dosierwalzen.

Die der Erfindung zugrunde liegende Aufgabe besteht somit darin, eine Dosiervorrichtung, insbesondere Reinigungseinrichtung, so zu gestalten, dass sie besonders betriebssicher einsetzbar ist und dabei einen besonders geringen Platzbedarf aufweist. Insbesondere soll dabei auch die Zugänglichkeit für einen Bediener vereinfacht werden.

Diese Aufgabe wird erfindungsgemäß durch die Merkmale des Patentanspruches 1 gelöst.

In Folge dieser Maßnahme ist ein Anhaften und/oder Ansammeln von Verschmutzungen und/oder vom granularen Material auf der Reinigungseinrichtung zumindest nahezu ausgeschlossen. Das Reinigungselement ist hierbei vorzugsweise bolzenartig und insbesondere auf einer flachen Seite am Halteelement angeordnet. Die Länge des Reinigungselementes beträgt dabei bevorzugt ein Vielfaches der Länge bzw. Dicke des Halteelements, wobei die Länge bzw. Dicke des Halteelements ein Maß darstellt, mit der sich das Halteelement in Richtung des Dosierelements erstreckt. Das Reinigungselement ist dabei besonders bevorzugt zumindest nahezu senkrecht, insbesondere in einem rechten Winkel, auf dem Halteelement angeordnet. Alternativ hierzu ist auch ein in einem Winkel von bis zu 45 Grad zur Senkrechten geneigtes Reinigungselement denkbar. Mit einer derartigen Ausführungsform ist eine Reinigungseinrichtung, insbesondere ein Halteelement, mit besonders geringem Platzbedarf erreicht.

Darüber hinaus ist das Reinigungselement, insbesondere die Reinigungseinrichtung, zumindest teilweise aus einem, insbesondere elastomeren und/oder thermoplastischen (TPU), Kunststoffmaterial ausgebildet. Gegenüber herkömmlichen Reinigungselementen, insbesondere Reinigungseinrichtungen, erreicht eine derartige Ausführungsform auf der einen Seite eine hohe eigene Verschleißfestigkeit und auf der anderen Seite einen verringerten Verschleiß des abgestreiften Dosierelements. Sowohl die Standzeit bzw. Einsatzzeit der Reinigungseinrichtung, als auch des Dosierelements, ist so in besonders einfacher Weise gesteigert.

Besonders bevorzugt ist das Reinigungselement nach Art eines zumindest teilweise elastischen und/oder flexiblen Reinigungsfingers ausgebildet.

Ferner weist die Dosiervorrichtung bevorzugt zumindest ein Haltemittel auf, mit dem die Reinigungseinrichtung form- und/oder kraftschlüssig, und vorzugsweise werkzeuglos und/oder zerstörungsfrei, verbindbar ist. Dies vereinfacht insbesondere die Montage und/oder Demontage für Reinigungs-, Wartungs- und/oder Instandsetzungszwecke der Reinigungseinrichtung.

In einer bevorzugten Ausführungsform der erfindungsgemäßen Dosiervorrichtung ist die Reinigungseinrichtung einteilig ausgebildet. Das wenigstens eine Reinigungselement ist dabei ferner bevorzugt am Haltelement angeformt und vorzugsweise aus zumindest nahezu dem gleichen Material ausgebildet. Gegenüber einer vereinfachten Montage der Reinigungseinrichtung ist somit außerdem die Handhabbarkeit der Reinigungseinrichtung verbessert. Des Weiteren ist mit einer derartigen Ausführungsform der Platzbedarf, aufgrund nicht erforderlicher Befestigungsmittel zwischen Reinigungs- und Halteelement, noch weiter reduziert.

In einer Weiterbildung der erfindungsgemäßen Dosiervorrichtung weist das Reinigungselement wenigstens abschnittsweise einen zumindest im Wesentlichen runden oder ovalen Querschnitt auf. Das Reinigungselement ist hierbei bevorzugt in einer Längsrichtung des Reinigungselements gesehen zumindest nahezu durchgehend rund und/oder ovalförmig ausgebildet. Alternativ oder zusätzlich hierzu ist auch ein mehreckiger und/oder polygonförmiger Querschnitt des Reinigungselements denkbar, wobei die Ecken und/oder Kanten zumindest teilweise abgerundet und/oder angefast ausgebildet sind. Durch diese Ausführungsform ist die Wahrscheinlichkeit von Anhaftungen an der Reinigungseinrichtung in besonders einfacher Weise verringert.

Die erfindungsgemäße Dosiervorrichtung weist eine Mehrzahl von Nockenreihen auf. Je nach Ausführungsform ist dabei ein, insbesondere nach Art einer Dosierwalze und/oder -trommel ausgebildetes, Dosierelement mit einer Mehrzahl von Nockenreihen oder mehrere, insbesondere nach Art eines Dosierrads ausgebildete, Dosierelemente mit jeweils zumindest einer Nockenreihe verwendbar.

In einer anderen bevorzugten Ausführungsform der erfindungsgemäßen Dosiervorrichtung ist das wenigstens eine Reinigungselement in axialer Richtung gesehen, vorzugsweise mittig, zwischen zwei Dosierelementen und/oder Nockenreihen angeordnet und dazu eingerichtet, zumindest stirnseitig abwechselnd in die Dosierelemente und/oder Nockenreihen einzugreifen. Die Stirnseite wird dabei bevorzugt von einem in das Dosierelement und/oder die Nockenreihe eingreifenden oder sich erstreckenden Ende des Reinigungselements gebildet. Die Dosierelemente und/oder Nockenreihen sind hierbei, in axialer Richtung zur Drehachse des Dosierelementes gesehen, nebeneinander angeordnet, wobei das wenigstens eine Reinigungselement zumindest nahezu zentrisch zwischen zwei Dosierelementen und/oder Nockenreihen angeordnet ist. Das wenigstens eine Reinigungselement ist hierbei dazu eingerichtet, abwechselnd in die beiden Dosierelemente und/oder Nockenreihen einzugreifen, wobei eine zumindest im Wesentlichen axial zur Drehachse gerichtete Bewegung des Reinigungselements zumindest teilweise mit einer Drehung der Dosierelemente und/oder Nockenreihen korrespondiert. Ein am Halteelement angeordnetes und/oder angeformtes Ende des Reinigungselementes ist hierbei bevorzugt, in axialer Richtung gesehen, ortsfest gegenüber den Dosierelementen und/oder Nockenreihen angeordnet. Die Anzahl und somit der Platzbedarf derartig ausgeführter Reinigungseinrichtungen, insbesondere Reinigungselemente, ist so gegenüber herkömmlichen Ausführungsformen noch weiter verringert.

Eine jeweilige erfindungsgemäße Nockenreihe weist insbesondere eine Mehrzahl von am Umfang des Dosierelements verteilter Nockenvorsprünge und/oder Nockentäler auf. Die Nockenvorsprünge und/oder Nockentäler einer ersten Nockenreihe sind dabei zu den Nockenvorsprüngen und/oder Nockentälern einer benachbarten Nockenreihe versetzt angeordnet. Somit ist beispielsweise neben einem Nockenvorsprung einer ersten Nockenreihe ein Nockental einer benachbarten Nockenreihe angeordnet. Das den zwei Nockenreihen zugeordnete Reinigungselement ist vorzugsweise dazu eingerichtet, sich, zumindest stirnseitig, von einem Nockental der ersten Nockenreihe zum Nockental einer benachbarten Nockenreihe zu bewegen. Besonders bevorzugt sind die Nockenvorsprünge auf zumindest einer, insbesondere mit dem Reinigungselement in Kontakt bringbaren, Seite abgeschrägt ausgebildet, wodurch die, insbesondere seitliche, Bewegung des Reinigungselementes besonders gleichmäßig ausgeführt wird.

Erfindungsgemäß weist die Dosiervorrichtung, insbesondere in einer axialen Richtung des Dosierelements gesehen, eine Mehrzahl von nebeneinander angeordneten Nockenreihen auf, während die Reinigungseinrichtung mehrere nebeneinander angeordnete, und vorzugsweise zueinander beabstandete, Reinigungselemente umfasst.

Erfindungsgemäß sind die Reinigungselemente an einem, insbesondere gemeinsamen, Halteelement angeordnet und jeweils zumindest einer Nockenreihe zugeordnet. Das Halteelement bildet somit bevorzugt die Basis für eine Mehrzahl an Reinigungselementen, die jeweils zumindest einer Nockenreihe oder alternativ zwei zueinander benachbarten Nockenreihen zugeordnet sind. Besonders bevorzugt ist eine Reinigungseinrichtung mit zumidnest zwei gemeinsam an einem Halteelement angeordneten Reinigungselementen. Diese Ausführungsform schafft einen noch weiter reduzierten Platzbedarf und/oder eine verbesserte Handhabung der Reinigungseinrichtung.

Bei der erfindungsgemäßen Dosiervorrichtung sind zueinander benachbarte Reinigungselemente, in einer Umfangsrichtung bzw. Drehrichtung des Dosierelementes gesehen, versetzt zueinander angeordnet. Die Reinigungselemente sind hierbei bevorzugt zumindest teilweise unterschiedlich zur Drehachse des Dosierelements beabstandet. Besonders bevorzugt ist zumindest ein erstes Reinigungselement auf einer ersten Höhenlage und zumindest ein zweites oder weiteres Reinigungselement auf einer zweiten Höhenlage zur Drehachse angeordnet. Alternativ oder zusätzlich kann auch zumindest ein erstes Reinigungselement in einem ersten Winkel in das wenigstens eine Dosierelement eingreifen und zumindest ein zweites Reinigungselement in einem anderen Winkel, um die Drehachse des zumindest einen Dosierelements, eingreifen. Mittels einer derartigen Ausführungsform wird ein Verstopfen und/oder Verkeilen von Verschmutzungen und/oder granularem Material, zwischen benachbarten Reinigungselementen, zumindest nahezu ausgeschlossen.

Darüber hinaus ist eine Dosiervorrichtung bevorzugt, die zumindest ein erstes Dosierelement mit höherer Teilung der wenigstens einen Nockenreihe und zumindest ein zweites Dosierelement mit geringerer Teilung der wenigstens einen Nockenreihe aufweist. Eine derartige Dosiervorrichtung ist insbesondere dazu geeignet, granulares Material unterschiedlicher Größen und/oder Arten zu dosieren. Vorzugsweise ist dabei das erste Dosierelement nach Art eines Feindosierrads, insbesondere für besonders kleines granulares Material bzw. Mikrogranulat, und das zweite Dosierelement nach Art eines Grobdosierrads, insbesondere für verhältnismäßig großes granulares Material, ausgebildet. Ferner ist dabei dem ersten Dosierelement wenigstens ein Reinigungselement auf einer ersten Höhenlage zugeordnet, während dem zweiten Dosierelement wenigstens ein Reinigungselement auf einer zweiten Höhenlage zugeordnet ist.

Darüber hinaus umfasst die Dosiervorrichtung vorzugsweise zumindest eine Umhausung bzw. ein Gehäuse, innerhalb der das wenigstens eine Dosierelement und/oder die wenigstens eine Reinigungseinrichtung angeordnet ist. Alternativ oder zusätzlich kann der Dosiervorrichtung, insbesondere dem Dosierelement, wenigstens eine Abdeckung zugeordnet sein, mittels der die Dosiervorrichtung, insbesondere das Dosierelement, während der Ausbringung zumindest teilweise abdeckbar ist.

In einer weiteren Weiterbildung der erfindungsgemäßen Dosiervorrichtung ist die zumindest eine Reinigungseinrichtung an der Abdeckung angeordnet und/oder anbringbar. Vorzugsweise weist die Abdeckung hierbei zumindest ein der Reinigungseinrichtung zugeordnetes Haltemittel auf, mittels dem die Reinigungseinrichtung mit der Abdeckung verbindbar ist. Bei einer alternativen oder zusätzlichen Ausführungsform ist das wenigstens eine Haltemittel an der Umhausung bzw. dem Gehäuse der Dosiervorrichtung angeordnet. Diese Ausführungsform erlaubt eine besonders einfache Zugänglichkeit der Reinigungseinrichtung.

Darüber hinaus ist eine erfindungsgemäße Dosiervorrichtung bevorzugt, bei der die zumindest eine Abdeckung, insbesondere schwenkbar, zwischen einer geschlossenen und einer geöffneten Stellung verbringbar ist, wobei die wenigstens eine Reinigungseinrichtung in einer geöffneten Stellung der Abdeckung, vorzugsweise werkzeuglos, mittels Form- und/oder Kraftschluss, insbesondere Reibschluss, mit der Abdeckung verbindbar ist. Während einer verschwenkten bzw. geöffneten Betriebsposition der Abdeckung, ist die Reinigungseinrichtung vorzugsweise in das wenigstens eine dazu korrespondierende Haltemittel der Abdeckung einschiebbar. Bei einer derartigen Ausführungsform ist die Zugänglichkeit und/oder die Montage der Reinigungseinrichtung noch weiter verbessert.

Die der Erfindung zugrunde liegende Aufgabe wird ebenso mit einer landwirtschaftlichen Verteilmaschine, insbesondere Sämaschine, zum Ausbringen von granularem Material, insbesondere Saatgut und/oder Dünger, mit zumindest einer Dosiervorrichtung gelöst, wobei die Dosiervorrichtung nach zumindest einer der vorgenannten erfindungsgemäßen Ausführungsformen ausgebildet ist. Hinsichtlich der Vorteile und Modifikationen der erfindungsgemäßen Verteilmaschine wird zunächst auf die Vorteile und Modifikationen der erfindungsgemäßen Dosiervorrichtung verwiesen.

Weitere Einzelheiten der Erfindung sind der Beispielsbeschreibung und den Zeichnungen zu entnehmen. Die Zeichnungen zeigen
- Fig.1: eine beispielhafte als Sämaschine ausgebildete landwirtschaftliche Verteilmaschine in perspektivischer Ansicht von hinten;
- Fig.2: mehrere erfindungsgemäße Dosiervorrichtungen innerhalb der Verteilmaschine in perspektivischer Ansicht;
- Fig.3: eine erfindungsgemäße Dosiervorrichtung in einer Seitenansicht und in Schnittdarstellung;
- Fig.4: die Dosiervorrichtung aus Fig.3 in einer perspektivischen Ansicht von hinten;
- Fig.5: eine erfindungsgemäße Reinigungseinrichtung in vergrößerter Perspektivansicht;
- Fig.6A: die Reinigungseinrichtung aus Fig.5 im verbauten Zustand und linksseitiger Auslenkung eines Reinigungselements;
- Fig.6B: die Reinigungseinrichtung aus Fig.6A ohne seitlicher Auslenkung des Reinigungselements;
- Fig.6C: die Reinigungseinrichtung aus Fig.6A mit rechtsseitiger Auslenkung des Reinigungselements;
- Fig.7A: die Dosiervorrichtung mit einer verschwenkten bzw. geöffneten Abdeckung in Seitenansicht; und
- Fig.7B: die Dosiervorrichtung aus der Fig.7A mit geschlossener Abdeckung.

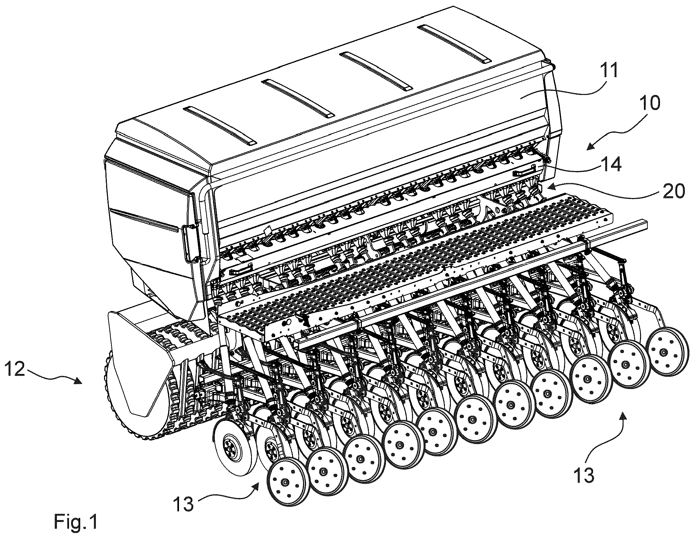

Eine landwirtschaftliche Verteilmaschine 10 zum Ausbringen von granularem Material M, insbesondere Saatgut und/oder Dünger, auf einer landwirtschaftlichen Nutzfläche ist in der Fig.1 gezeigt. Die Verteilmaschine 10 ist beispielhaft nach Art einer getragenen und mechanischen Sämaschine ausgebildet. Alternativ hierzu kann die gezeigte Verteilmaschine 10 auch nach Art einer gezogenen, pneumatischen und/oder einer Einzelkorn-Sämaschine ausgebildet sein. Die Verteilmaschine 10 umfasst hierbei einen Vorratsbehälter 11 zur Bevorratung des zu verteilenden und/oder granularen Materials M. Unterhalb des Vorratsbehälters 11 sind zum Ablegen des granularen Materials M eine Walzeneinheit 12 und eine Mehrzahl von Ausbringorganen 13, insbesondere Scheibenscharen und/oder Andruckrollen, angeordnet, denen das granulare Material M bedarfsgerecht zubringbar ist.

Um das granulare Material M den jeweiligen Ausbringorganen 13 bedarfsgerecht aus dem Vorratsbehälter 11 zuzubringen, umfasst die Verteilmaschine 10 über eine Mehrzahl von Dosiervorrichtungen 20, die in diesem Ausführungsbeispiel hinter einer gemeinsamen und/oder abnehmbaren Klappe 14 der Verteilmaschine 10 angeordnet sind.

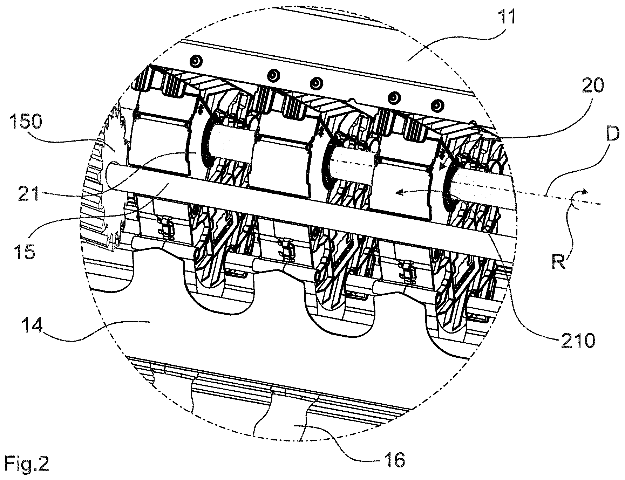

Die Dosiervorrichtungen 20 sind bei geöffneter Klappe 14 in einer vergrößerten Ansicht in der Fig.2 gezeigt. Es ist zu sehen, dass die Dosiervorrichtungen 20 am Vorratsbehälter 11, insbesondere an einem trichterförmigen Auslaufbereich des Vorratsbehälters 11, angeordnet sind und der Bauraum in diesem Bereich unter anderem durch eine Mehrzahl von Zahnrädern 150 und eine zugeordnete Vorgelegewelle 15 besonders eingeschränkt ist. Die Dosiervorrichtungen 20 umfassen hierbei hinter einer Umhausung 21, insbesondere einer verschwenkbaren Abdeckung 210, jeweils zumindest ein um eine Drehachse D rotatorisch antreibbares Dosierelement 22.

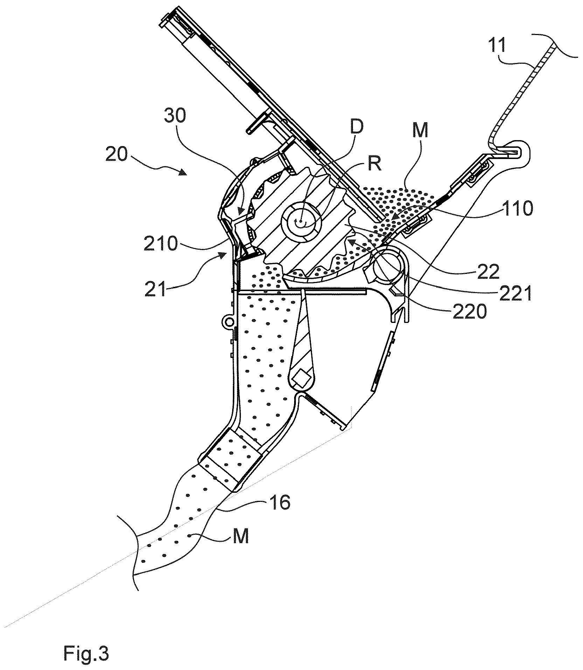

Eine erfindungsgemäße Dosiervorrichtung 20 ist in einer seitlichen Schnittansicht in der Fig.3 zu sehen. Das granulare Material M wird dabei auf einer dem Vorratsbehälter 11 zugewandten Seite der Dosiervorrichtung 20, über eine einstellbare Auslauföffnung 110, dem zumindest einen Dosierelement 22 bereitgestellt. Das zumindest eine Dosierelement 22 ist hierbei nach Art eines Dosierrads mit zumindest einer Nockenreihe 220 ausgebildet. Alternativ zur gezeigten Ausführungsform kann das zumindest eine Dosierelement 22 auch nach Art einer Dosierwalze und/oder-trommel mit zumindest einer, vorzugsweise mehreren nebeneinander und/oder alternierenden, Nockenreihen 220 ausgebildet sein. Das Dosierelement 22 ist mittels der zumindest einen Nockenreihe 220 dazu eingerichtet, das aus dem Vorratsbehälter 11 zubringbare Material M zumindest teilweise in einer Drehrichtung R zu fördern und in einstellbaren Mengen und in Richtung der Ausbringorgane 13, insbesondere über eine nachgeordnete Förderleitung 16, auszugeben.

Für eine besonders hohe Betriebssicherheit der Dosiervorrichtung 20 ist dem zumindest einen Dosierelement 22 wenigstens eine Reinigungseinrichtung 30 zugeordnet, welche dazu eingerichtet ist, am Dosierelement 22, insbesondere der Nockenreihe 220, anhaftende Verschmutzungen und/oder Agglomerationen vom granularen Material M zumindest teilweise zu lösen und so das Dosierelement 22, insbesondere die Nockenreihe 220, zumindest teilweise zu reinigen.

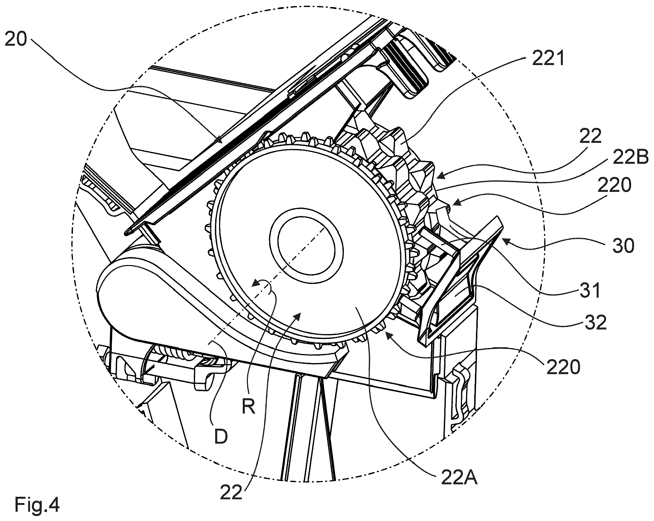

Die Fig.4 zeigt eine erfindungsgemäße Reinigungseinrichtung 30 in perspektivischer Ansicht von hinten. Die Reinigungseinrichtung 30 ist hierbei einem ersten Dosierelement 22A, insbesondere mit kleiner Teilung der zumindest einen Nockenreihe 220, und einem zweiten Dosierelement 22B, insbesondere mit großer Teilung der zumindest einen Nockenreihe 220, zugeordnet. Das erste und zweite Dosierelement 22A, 22B weisen hierbei jeweils eine Mehrzahl von versetzt nebeneinander angeordneten Nockenreihen 220 auf, wobei das erste Dosierelement 22A nach Art eines Feindosierrads, insbesondere für Mikrogranulat, und das zweite Dosierelement 22B nach Art eines Grobdosierrads, insbesondere für größeres Material M, ausgeführt ist. Daneben umfasst die Reinigungseinrichtung 30 wenigstens ein, insbesondere elastisches und/oder stiftartiges, Reinigungselement 31, das in zumindest eine jeweilige zugeordnete Nockenreihe 220 eingreift und somit dazu eingerichtet ist, das Dosierelement 22, insbesondere die Nockenreihe 220, zumindest teilweise abzustreifen und/oder zu reinigen. Das wenigstens eine Reinigungselement 31 ist hierbei an wenigstens einem Halteelement 32 angeordnet.

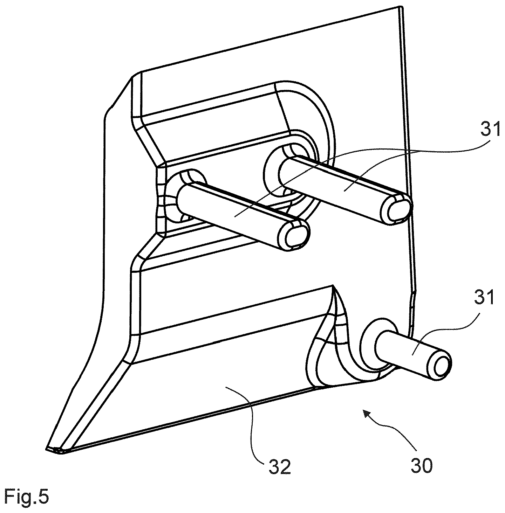

Die erfindungsgemäße Reinigungseinrichtung 30 ist in einer weiteren Ansicht, insbesondere in Einzelansicht, in der Fig.5 besonders gut zu sehen. Die Reinigungseinrichtung 30 umfasst hierbei mehrere zueinander beabstandete Reinigungselemente 31, die gemeinsam an dem Halteelement 32 angeordnet, insbesondere jeweils bolzenartig angeformt, sind. Die Reinigungselemente 31 sind des Weiteren zumindest im Wesentlichen senkrecht zum Halteelement 32 ausgerichtet, wobei alternativ auch eine leichte Neigung von bis zu 45 Grad gegenüber einer senkrechten Ausrichtung denkbar ist. Darüber hinaus ist zu sehen, dass die, insbesondere zueinander benachbarten, Reinigungselemente 31 zumindest teilweise zueinander versetzt sind. Der Querschnitt der Reinigungselemente 31 ist wenigstens abschnittsweise rund und/oder oval ausgebildet. Die Reinigungseinrichtung 30 ist ferner einteilig ausgebildet, wobei die Reinigungselemente 31 und das Halteelement 32 zumindest nahezu aus dem gleichen, insbesondere elastomeren und/oder thermoplastischen (TPU), Kunststoffmaterial ausgebildet sind. Das Halteelement 32 weist eine zumindest im Wesentlichen flache und/oder scheibenförmige Form auf und erstreckt sich mit einer verhältnismäßig geringen Dicke bzw. Länge in Richtung des Dosierelements 22.

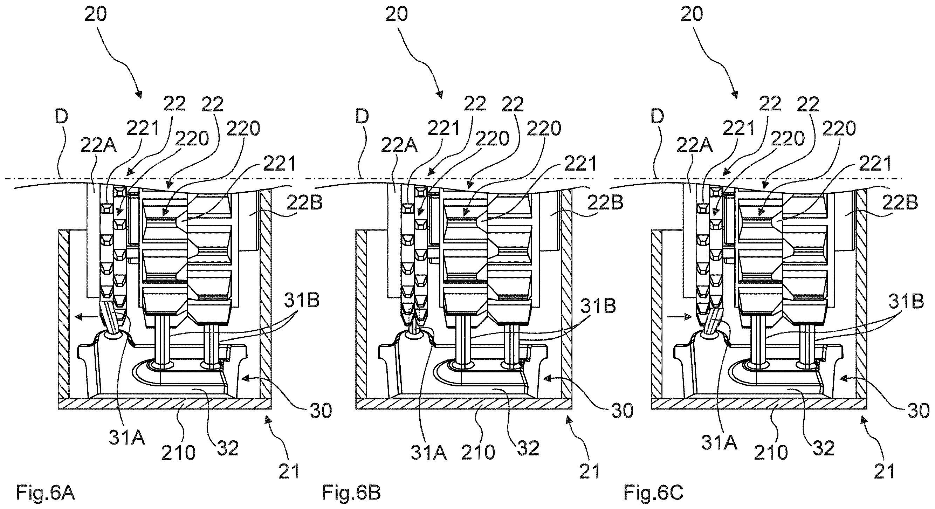

Eine erfindungsgemäße Anordnung und Funktionsweise der Reinigungseinrichtung 30, insbesondere der Reinigungselemente 31, ist in den Fig.6A bis 6C zu sehen. Hierbei ist das erste Reinigungselement 31A, insbesondere auf der Position links außen, zu betrachten. Das Reinigungselement 31A ist dabei, insbesondere mittig, zwischen zwei benachbarten Nockenreihen 220 des ersten Dosierelements 22A angeordnet. Das Reinigungselement 31A ist, insbesondere infolge einer Drehbewegung des Dosierelements 22A, dazu eingerichtet, eine zumindest stirnseitig abwechselnde Bewegung zwischen den beiden Nockenreihen 220 des ersten Dosierelements 22A auszuführen. Das Reinigungselement 31A bewegt sich hierzu, insbesondere in axialer Richtung des Dosierelements 22 gesehen, vor und zurück entlang mehrerer an den jeweiligen Nockenreihen 220 angeordneter Nockenvorsprünge 221. in der Fig.6A greift das Reinigungselement 31 zumindest stirnseitig in eine linke Nockenreihe 220 des ersten Dosierelementes 22A ein. Infolge einer Drehung in Drehrichtung R des Dosierelements 22, wird das Reinigungselement 31A von dem dazu zugeordneten Nockenvorsprung 221 zur Mitte hin und/oder in Richtung der benachbarten Nockenreihe 220 verschoben, wie in Fig.6B zu sehen ist. Nach weiterer Drehung des Dosierelements 22 wird das Reinigungselement 31 zumindest nahezu vollständig in die benachbarte bzw. rechte Nockenreihe 220 verschoben, wie in Fig.6C zu sehen ist. Bei weiterer Drehung des Dosierelements 22A wird das Reinigungselement 31 in umgekehrter Richtung wieder zurück verschoben. Dieser Vorgang bzw. diese Funktionsweise wird fortlaufend während der Drehung des Dosierelements 22 ausgeführt. Mögliche Anhaftungen in Form von Verschmutzungen und/oder granularem Material M innerhalb der Nockenreihen 220, werden so mittels des ersten Reinigungselements 31A zumindest im Wesentlichen seitlich herausgedrückt.

Eine alternativ bzw. anderen Funktionsweise ist bei den benachbarten, insbesondere zweiten, Reinigungselementen 31B zu sehen. Die beiden Reinigungselemente 31B sind in Drehrichtung R bzw. Umfangsrichtung des Dosierelements 22 in einem Winkel und/oder in der Höhe versetzt zum Reinigungselement 31A des ersten Dosierelements 22A angeordnet. Darüber hinaus sind die beiden Reinigungselemente 31B jeweils mittig zur jeweiligen zugeordneten Nockenreihe 220 des zweiten Dosierelements 22B angeordnet. Die beiden, insbesondere zweiten, Reinigungselemente 31B werden während der Drehung des zumindest einen Dosierelements 22 zumindest nahezu ausschließlich in einer vertikalen Richtung zur Drehachse D bewegt und/oder verformt.

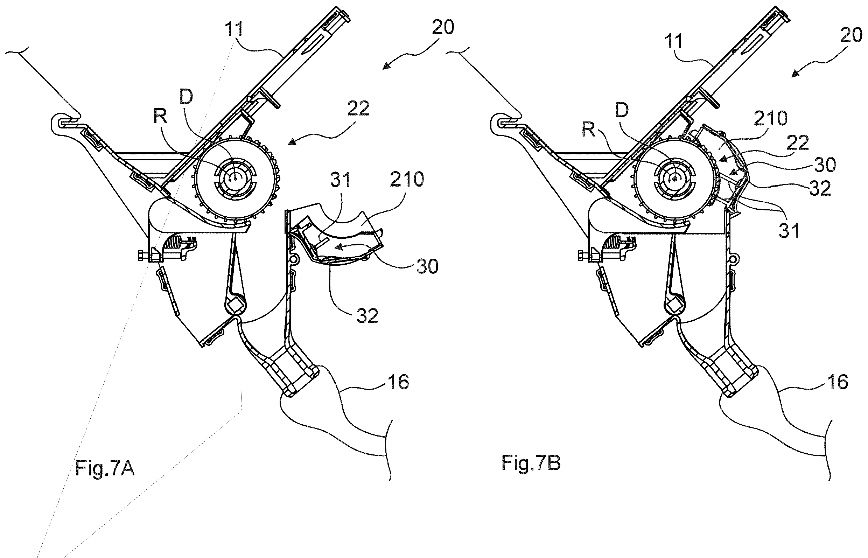

Die Reinigungseinrichtung 31 ist, wie in der Fig.7A und 7B näher gezeigt, an der Abdeckung 210 der Dosiervorrichtung 20 angeordnet und/oder anbringbar. Zur verbesserten Zugänglichkeit der Reinigungseinrichtung 30, ist die Abdeckung 210 schwenkbar ausgebildet. Die Fig.7A zeigt die Abdeckung 210 in geöffneter Stellung und die Reinigungseinrichtung 30 in einer außer Betriebsposition. Die Fig.7B zeigt die Abdeckung 210 in geschlossener Stellung und die Reinigungseinrichtung 30 somit in einer eingreifenden Betriebsposition. Die Reinigungseinrichtung 30 ist während der geöffneten Stellung mit zumindest einem an der Abdeckung 210 angeordneten, in den Figuren jedoch nicht gezeigten, Haltemittel verbindbar und/oder von diesem lösbar. Hierzu wird die Reinigungseinrichtung 30, insbesondere das Halteelement 32, zur Montage in das zumindest eine Haltemittel geschoben. Nach dem Einschieben wird die Reinigungseinrichtung 30, insbesondere das Halteelement 32, im Wesentlichen mittels Kraft- und/oder Reibschluss an der Abdeckung 210 gehalten und/oder verbracht. In geschlossener Stellung ist die Reinigungseinrichtung 30, insbesondere das Halteelement 32 seitlich, zumindest nahezu vollständig umschlossen, wodurch die Reinigungseinrichtung 30, insbesondere das Halteelement 32, form- und/oder kraftschlüssig mit der Abdeckung, insbesondere der Dosiervorrichtung 20 und/oder der Umhausung 21, verbunden ist.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Verteilmaschine
- 11: Vorratsbehälter
- 110: Auslauföffnung
- 12: Walzeneinheit
- 13: Ausbringorgane
- 14: Klappe
- 15: Vorgelegewelle
- 150: Zahnrad
- 16: Förderleitung
- 20: Dosiervorrichtung
- 21: Umhausung, Gehäuse
- 210: Abdeckung
- 22: Dosierelement, Dosierrad
- 22A: erstes Dosierelement, Feindosierrad
- 22B: zweites Dosierelement, Grobdosierrad
- 220: Nockenreihe
- 221: Nockenvorsprung
- 30: Reinigungseinrichtung
- 31: Reinigungselement
- 31A: erstes Reinigungselement
- 31B: zweites Reinigungselement
- 32: Halteelement

- D: Drehachse
- M: granulares Material
- R: Drehrichtung

## Patentansprüche

1. Dosiervorrichtung (20) einer landwirtschaftlichen Verteilmaschine (10), insbesondere Sämaschine, zum Ausbringen von granularem Material (M), insbesondere Saatgut und/oder Dünger, umfassend,
- zumindest ein um eine Drehachse (D) rotatorisch antreibbares, insbesondere nach Art einer Dosierwalze und/oder eines Dosierrads ausgebildetes, Dosierelement (22), welches mehrere, insbesondere alternierend, nebeneinander angeordnete, Nockenreihen (220) aufweist, und
- zumindest eine dem Dosierelement (22) zugeordnete Reinigungseinrichtung (30) mit mehreren, nebeneinander angeordneten , insbesondere elastischen und/oder stiftartigen, Reinigungselementen (31) und wenigstens einem Halteelement (32), wobei die Reinigungselemente (31) am, insbesondere gemeinsamen, Halteelement (32) und in die Nockenreihen (220) eingreifend angeordnet sind, und wobei die Reinigungselemente (31) jeweils zumindest einer Nockenreihe (220) zugeordnet und dazu eingerichtet sind, wenigstens eine Nockenreihe (220) zumindest teilweise abzustreifen und/oder zu reinigen, wobei die Reinigungselemente (31) zumindest im Wesentlichen senkrecht am Halteelement (32) angeordnet sind,
**dadurch gekennzeichnet, dass**
zueinander benachbarte Reinigungselemente (31), in einer Umfangsrichtung des Dosierelements (22) gesehen, versetzt zueinander angeordnet sind, und dass das Halteelement (32) eine zumindest im Wesentlichen flache und/oder scheibenförmige Form aufweist.

2. Dosiervorrichtung (20) nach Anspruch 1, **dadurch gekennzeichnet, dass** die Reinigungseinrichtung (30) einteilig ausgebildet ist; und dass die Reinigungselemente (31) am Haltelement angeformt sind.

3. Dosiervorrichtung (20) nach zumindest einem der vorgenannten Ansprüche 1 und 2, **dadurch gekennzeichnet, dass** die Reinigungselemente (31) wenigstens abschnittsweise einen zumindest im Wesentlichen runden oder ovalen Querschnitt aufweisen.

4. Dosiervorrichtung (20) nach zumindest einem der vorgenannten Ansprüche 1 bis 3, **dadurch gekennzeichnet, dass** die Reinigungselemente (31) in axialer Richtung gesehen, vorzugsweise mittig, zwischen zwei Nockenreihen (220) angeordnet sind und dazu eingerichtet sind, zumindest stirnseitig abwechselnd in die Nockenreihen (220) einzugreifen.

5. Dosiervorrichtung (20) nach zumindest einem der vorgenannten Ansprüche 1 bis 4, mit zumindest einer der Dosiervorrichtung (20), insbesondere dem wenigstens einen Dosierelement (22), zugeordneten Abdeckung (210), **dadurch gekennzeichnet, dass** die zumindest eine Reinigungseinrichtung (30) an der Abdeckung (210) angeordnet und/oder anbringbar ist.

6. Dosiervorrichtung (20) nach Anspruch 5, **dadurch gekennzeichnet, dass** die zumindest eine Abdeckung (210), insbesondere schwenkbar, zwischen einer geschlossenen und einer geöffneten Stellung verbringbar ist, wobei die wenigstens eine Reinigungseinrichtung (30) in einer geöffneten Stellung der Abdeckung (210) mittels Form- und/oder Kraftschluss, insbesondere Reibschluss, mit der Abdeckung (210) verbindbar ist.

7. Landwirtschaftliche Verteilmaschine (10), insbesondere Sämaschine, zum Ausbringen von granularem Material (M), insbesondere Saatgut und/oder Dünger, mit zumindest einer Dosiervorrichtung (20), **dadurch gekennzeichnet, dass** die zumindest eine Dosiervorrichtung (20) nach zumindest einem der vorgenannten Ansprüche 1 bis 6 ausgebildet ist.

## Claims

1. Dosing device (20) of an agricultural distribution machine (10),
in particular a seed drill, for spreading granular material (M), in particular seed and/or fertilizer, comprising,
- at least one dosing element (22) which can be driven in rotation about an axis of rotation (D) and is designed in particular in the manner of a dosing roller and/or a dosing wheel, which element has a plurality of cam rows (220) arranged next to one another, in particular in an alternating manner, and
- at least one cleaning apparatus (30) associated with the dosing element (22) and comprising a plurality of in particular resilient
and/or pin-like cleaning elements (31) arranged next to one another, and at least one holding element (32), the cleaning elements (31) being arranged on the in particular common holding element (32) so as to engage in the cam rows (220), and the cleaning elements (31) each being associated with at least one cam row (220) and being designed to at least partially strip and/or clean at least one cam row (220), the cleaning elements (31) being arranged at least substantially perpendicularly on the holding element (32),
**characterized in that**
mutually adjacent cleaning elements (31), viewed in a circumferential direction of the dosing element (22), are arranged so as to be offset from one another, and **in that** the holding element (32) has an at least substantially flat and/or disc-shaped form.

2. Dosing device (20) according to claim 1, **characterized in that** the cleaning apparatus (30) is formed in one piece; and **in that** the cleaning elements (31) are molded onto the holding element.

3. Dosing device (20) according to at least one of the preceding claims 1 and 2, **characterized in that** the cleaning elements (31) have, at least in portions, an at least substantially round or oval cross-section.

4. Dosing device (20) according to at least one of the preceding claims 1 to 3, **characterized in that** the cleaning elements (31), viewed in the axial direction, are preferably arranged centrally between two cam rows (220) and are designed
to engage alternately in the cam rows (220) at least on the end face.

5. Dosing device (20) according to at least one of the preceding claims 1 to 4, comprising at least one cover (210) associated with the dosing device (20), in particular the at least one dosing element (22), **characterized in that** the at least one cleaning apparatus (30) is arranged on and/or is attachable to the cover (210).

6. Dosing device (20) according to claim 5, **characterized in that** the at least one cover (210) can be moved, in particular pivotably, between a closed and an open position, it being possible to connect the at least one cleaning apparatus (30) to the cover (210) in an open position of the cover (210) by means of positive and/or non-positive locking, in particular frictional locking.

7. Agricultural distribution machine (10), in particular a seed drill, for spreading granular material (M), in particular seed and/or fertilizer, comprising at least one dosing device (20), **characterized in that** the at least one dosing device (20) is designed according to at least one of the preceding claims 1 to 6.

## Revendications

1. Dispositif de dosage (20) d'une épandeuse agricole (10),
en particulier un semoir, destiné à épandre de la matière granulaire (M), en particulier des semences et/ou des engrais, comprenant
- au moins un élément de dosage (22) pouvant être entraîné en rotation autour d'un axe de rotation (D), réalisé en particulier à la manière d'un cylindre de dosage et/ou d'une roue de dosage, qui présente plusieurs rangées de cames (220), en particulier agencées en alternance les unes à côté des autres, et
- au moins un système de nettoyage (30) associé à l'élément de dosage (22), comportant plusieurs éléments de nettoyage (31) agencés les uns à côté des autres, en particulier élastiques et/ou en forme de broche, et au moins un élément de maintien (32), les éléments de nettoyage (31) étant agencés sur l'élément de maintien (32), en particulier commun, et de manière à venir en prise dans les rangées de cames (220) et les éléments de nettoyage (31) étant associés respectivement à au moins une rangée de cames (220) et étant conçus pour racler et/ou nettoyer au moins partiellement au moins une rangée de cames (220), les éléments de nettoyage (31) étant agencés au moins sensiblement verticalement sur l'élément de maintien (32),
**caractérisé en ce que**
des éléments de nettoyage (31) voisins les uns des autres, vus dans une direction périphérique de l'élément de dosage (22), sont agencés de manière décalée les uns par rapport aux autres et **en ce que** l'élément de maintien (32) présente une forme au moins sensiblement plate et/ou en forme de disque.

2. Dispositif de dosage (20) selon la revendication 1,
**caractérisé en ce que** le système de nettoyage (30) est réalisé d'une seule pièce ; et **en ce que** les éléments de nettoyage (31) sont formés sur l'élément de maintien.

3. Dispositif de dosage (20) selon au moins l'une des revendications 1 et 2 susmentionnées, **caractérisé en ce que** les éléments de nettoyage (31) présentent au moins par sections une section transversale au moins sensiblement ronde ou ovale.

4. Dispositif de dosage (20) selon au moins l'une des revendications 1 à 3 susmentionnées, **caractérisé en ce que** les éléments de nettoyage (31) sont agencés, vus dans la direction axiale, de préférence au milieu entre deux rangées de cames (220) et sont conçus pour venir en prise au moins frontalement en alternance dans les rangées de cames (220).

5. Dispositif de dosage (20) selon au moins l'une des revendications 1 à 4 susmentionnées, comportant au moins un recouvrement (210) associé au dispositif de dosage (20), en particulier à l'au moins un élément de dosage (22), **caractérisé en ce que** l'au moins un système de nettoyage (30) est agencé et/ou peut être monté sur le recouvrement (210).

6. Dispositif de dosage (20) selon la revendication 5, **caractérisé en ce que** l'au moins un recouvrement (210) peut être déplacé, en particulier de manière pivotante, entre une position fermée et une position ouverte, l'au moins un système de nettoyage (30) pouvant être relié au recouvrement (210) dans une position ouverte du recouvrement (210) au moyen d'une liaison par complémentarité de forme et/ou à force, en particulier d'une liaison par friction.

7. Épandeuse agricole (10), en particulier semoir, destinée à épandre de la matière granulaire (M), en particulier des semences et/ou des engrais, comportant au moins un dispositif de dosage (20), **caractérisée en ce que** l'au moins un dispositif de dosage (20) est réalisé selon au moins l'une des revendications 1 à 6 susmentionnées.
